# EUROPEAN PATENT APPLICATION

(11) **EP 3 031 877 A1**
(43) Date of publication of application: **15.06.2016**
(21) Application number: 14848456.1
(22) Date of filing: 18.06.2014
(51) Int. Cl.: C09K 3/10, B32B 1/08, B32B 15/06, C23C 22/60, C23C 22/62, C23C 22/68, F16J 15/08, F16J 15/12, C23C 22/12

(54) **NITRILE RUBBER/METAL MULTILAYER MATERIAL FOR GASKET**

(30) Priority: 24.09.2013 JP 2013197057
(71) Applicant: NOK Corporation, Tokyo 105-8585 (JP)
(72) Inventor: TANAKA Nobuaki, Nihonmatsu-shi Fukushima 964-0811 (JP); SATO Takeshi, Nihonmatsu-shi Fukushima 964-0811 (JP)
(74) Representative: Adam, Holger
(86) International application number: PCT/JP2014/066107
(87) International publication number: WO 2015/045513

(57) **Abstract**

A nitrile rubber-metal laminated gasket material comprising a surface-treating agent layer containing a zirconium-containing compound, a phosphorus-containing compound, and silica; a vulcanizing adhesive layer; and a nitrile rubber layer, which are sequentially laminated on a metal plate. The nitrile rubber-metal laminated gasket material that has excellent heat resistance and exhibits sufficient adhesion even after being dipped in or exposed to long life coolant (LLC) in an actual use environment as a gasket, even when it is a laminate of a metal plate, such as SPCC or SPFC, and nitrile rubber.

## Description

### TECHNICAL FIELD

The present invention relates to a nitrile rubber-metal laminated gasket material, and more particularly to a nitrile rubber-metal laminated gasket material that has excellent LLC resistance and heat resistance.

### BACKGROUND ART

For nitrile rubber-metal laminated gaskets commercialized by surface-treating steel plates followed by vulcanization bonding of rubber via adhesives, zinc phosphate treatment, iron phosphate treatment, or the like is mainly used as the surface treatment of, for example, cold rolled steel plates (SPCC) and cold rolled high strength steel plates (SPFC). In these treatments, degreased steel plates are dipped in chemical liquid adjusted to be acidic, and insoluble coatings are formed on the steel plates, thereby ensuring rust prevention and adhesion with adhesives.

However, these treatments had the following problems: sludge (industrial waste) was generated at the stage of forming a film; it was necessary to always supply chemical agents because chemical components were reduced due to the reaction; and the cost was high.

As a metal surface-treating method that does not use zinc phosphate, iron phosphate, etc., a method using a surface treating agent containing silica, and titanium compound and zirconia compound derived from fluoride in an organic resin has been proposed (Patent Document 1). However, the method is not preferable in terms of facilities, since the surface treating agent contains fluorine, so that defluorination of wastewater becomes necessary.

### PRIOR ART DOCUMENTS

### PATENT DOCUMENTS

Patent Document 1 : JP-B-5050316
Patent Document 2 : JP-A-2006-218630
Patent Document 3 : JP-A-2008-75808
Patent Document 4 : JP-A-2004-83623
Patent Document 5 : JP-A-7-165953

### OUTLINE OF THE INVENTION

### PROBLEM TO BE SOLVED BY THE INVENTION

An object of the present invention is to provide a nitrile rubber-metal laminated gasket material that has excellent heat resistance and exhibits sufficient adhesion even after being dipped in or exposed to long life coolant (LLC) in an actual use environment as a gasket, even when it is a laminate of a metal plate, such as SPCC or SPFC, and nitrile rubber.

### MEANS FOR SOLVING THE PROBLEM

The object of the present invention can be attained by a nitrile rubber-metal laminated gasket material comprising a surface-treating agent layer containing a zirconium-containing compound, a phosphorus-containing compound, and silica; a vulcanizing adhesive layer; and a nitrile rubber layer, which are sequentially laminated on a metal plate.

### EFFECT OF THE INVENTION

The nitrile rubber-metal laminated gasket material of the present invention has excellent heat resistance and exhibits sufficient adhesion even after being dipped in or exposed to LLC.

### EMBODIMENTS FOR CARRYING OUT THE INVENTION

The metallic steel sheets for use in the present invention include sheets of iron, aluminum, copper, etc., or alloys thereof, etc., for example, cold rolled steel plates (SPCC) and cold rolled high strength steel plates (SPFC). A surface treating agent layer containing a zirconium-containing compound, a phosphorus-containing compound, and silica is formed on the steel sheets.

In the surface-treating agent layer, the element mass ratio of Zr element in the zirconium-containing compound to P element in the phosphorus-containing compound is 95:5 to 40:60, preferably 90:10 to 50:50; and the mass ratio of Zr element in the zirconium-containing compound to silica is 1:99 to 60:40, preferably 3:97 to 52:48. When the amount of zirconium element relative to phosphorus element is greater than this range, the LLC resistance of a non-dipped portion is reduced in an LLC half-dipping test, which is described later. In contrast, when the amount of zirconium element relative to phosphorus element is less than this range, heat resistance is reduced. Moreover, when the amount of silica relative to zirconium element is greater than this range, the LLC resistance of the non-dipped portion is reduced in the LLC half-dipping test, which is described later, and heat resistance is reduced. In contrast, when the amount of silica relative to zirconium element is less than this range, adhesion is reduced, and the stability of the treatment liquid is lowered.

In the film, the zirconium-containing compound exists in the form of zirconium phosphate or zirconium oxide, and the compound existing in the form of zirconium phosphate is preferably used. The treatment liquid containing zirconium nitrate, zirconium acetate, zirconium sulfate, zirconium ammonium carbonate, zirconium oxide, or the like can be used as the component to form them. Preferably, the treatment liquid containing zirconium ammonium carbonate is used.

Phosphoric acid is used as the phosphorus-containing compound. The amount thereof to be added is adjusted so that the element mass ratio of zirconium (Zr) to phosphorus (P) is 95:5 to 40:60, preferably 90:10 to 50:50, as stated above.

As the silica (silicon oxide), includes one prepared by dispersing dry process or wet process silica having a SiO₂ content of 85wt.% or more in an organic solvent or water, preferably one prepared by dispersing fine particles of anhydrous silica of high purity in an organic solvent or water to make it in a colloidal state, so-called colloidal silica, is used. As the colloidal silica one having an average particle size of 1-50nm, preferably 10-30nm, and dispersed in an organic solvent such as methanol, methyl ethyl ketone, methyl isobutyl ketone, etc. is used. Commercially available products can be used, for example, methanol silica sol (a product of Nissan Chemical Industries, Ltd.; dispersion having a solid matter concentration of 30wt.% in methanol), Snowtex MEK-ST (a product of the same company as above ; dispersion having a solid matter concentration of 30wt.% in methyl ethyl ketone), Snowtex MIBK-ST (a product of the same company as above ; dispersion having a solid matter concentration of 30wt.% in methyl isobutyl ketone) etc.

To enhance the effect of the surface-treating agent or ensure the solution stability, the surface-treating agent can further contain an inorganic acid such as nitric acid and sulfuric acid, an organic acid such as formic acid and acetic acid, a nitrogen-containing alkaline compound, such as ammonium hydroxide (aqua ammonia), ethylenediamine, triethylenetetramine, morpholine and choline, or the like.

In Patent Documents 2 and 3, the present applicant has proposed a nitrile rubber-metal laminate gasket material comprising a surface-treating agent layer containing elements of zirconium, phosphorus, and aluminum, a resin-based vulcanizing adhesive layer containing silica, and a nitrile rubber layer or hydrogenated nitrile rubber layer, which are sequentially laminated on a metallic steel plate. However, the surface-treating agent used in these inventions comprises Al element as an essential component, and silica is used as an essential component of the adhesive. In this respect, these inventions are different from the present invention.

The surface-treating agent is applied as a liquid dissolved or dispersed the afore-mentioned components in water on steel sheet, preferably SPCC, SPFC steel sheet, degreased with alkali, or the like, to a coating weight on one side of about 10 to 1,000mg/m², preferably about 100 to 500mg/m² by known coating method such as a spraying, dipping, brush coating and roll coating, followed by drying at room temperature, or with hot air, and baking at about 100 to 250°C for about 0.5 to 20 minutes.

On the steel plate treated with the surface-treating agent, a vulcanizing adhesive layer is formed using a thermosetting phenolic resin based adhesive composition or an adhesive composition comprising a combination of a thermosetting phenolic resin and a thermosetting resin, such as an epoxy resin.

The thermosetting phenol resin for use as a vulcanizing adhesive includes not only a novolak-type phenol resin, but also a resol-type phenol resin, a phenol resin having a dihydrobenzoxazine ring and these phenol resin can be used in combination. Further, these phenol resin can be used together with other thermosetting resin such as a novolak-type epoxy resin etc. including cresol novolak-type epoxy resin, a phenol novolak-type epoxy resin etc., or still further together with unvulcanized nitrilerubber or nitrile rubber compound.

The novolak-type phenol resin for use in the present invention includes resin having a softening point of about 80 to 150°C, obtained by condensation reaction of phenols having 2 or 3 replaceable nuclear hydrogen atoms at o-position and/or p-position with respect to the phenolic hydroxyl group such as phenol, p-cresol, m-cresol, p-t-butylphenol, p-phenylphenol, bisphenol A, etc. or a mixture thereof with formaldehyde in the presence of an acidic catalyst such as hydrochloric acid, oxalic acid, etc. Preferably, novolak-type phenol resins having a softening point of 100°C or higher, prepared from a mixture of m-cresol and p-cresol, and formaldehyde are used.

The resol-type phenol resin for use in the present invention includes those obtained by conducting the afore-mentioned condensation reaction in the presence of an alkali catalyst such as sodium hydroxide, sodium carbonate, magnesium hydroxide, ammonia, etc.

The thermosetting phenol resin having a dihydrobenzoxazine ring for use in the present invention includes any thermosetting phenol resins having a dihydrobenzoxazine ring and capable of curing by ring-opening reaction of dihydrobenzoxazine ring, for example, dihydro-2H-1,3-benzoxazine derivative can be synthesized from, e.g. a compound having a phenolic hydroxyl group, a primary amine, and folmaldehyde, as shown in the following reaction scheme (See Patent Document 4):

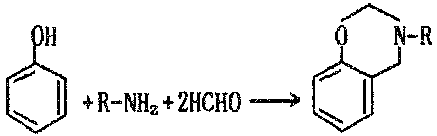

The compound having a phenolic hydroxyl group must have a hydrogen atom bonded to at least one o-position with respect to the phenolic hydroxyl group of aromatic ring, and preferably polyfunctional phenols having a plurality of phenolic hydroxyl groups in the molecule can be used. For example, phenols such as catechol, resorcinol, hydroquinone, etc., dihydroxynaphthalenes such as 1,5-dihydroxynaphthalene, 2,6-dihydroxynaphthalene, etc., bisphenols such as bisphenol A, bisphenol F, etc., phenol resins such as novolak-type or resol-type phenol resin, melaminephenol resin, alkylphenol resin, etc.

The primary amine includes, for example, aromatic amines such as aniline, toluidine, etc. and aliphatic amines such as methylamine, ethylamine, etc.

One mole each of a compound having a phenolic hydroxyl group and a primary amine, and at least 2 moles of formaldehyde are subjected to reaction in the presence of an oxalic acid catalyst or the like at a reaction temperature of about 70 to 130°C, preferably about 90 to 110°C for about 1/3 to 4 hours, followed by removal of the unreacted phenolic compound, primary amine, formaldehyde, etc. at not higher than 120°C under reduced pressure, thereby obtaining a thermosetting resin having a dihydrobenzoxazine ring.

The resin component can generally be one comprising about 1 to 500 parts by weight, preferably about 10 to 100 parts by weight, of resol-type phenolic resin based on 100 parts by weight of novolak-type phenolic resin. The combined use with resol-type phenolic resin exhibits the effect of further improving water resistant adhesion; however, when the amount of resol-type phenolic resin is greater than this range, heat resistant adhesion is reduced.

When an epoxy resin is used in combination with a phenolic resin, the epoxy resin is used at a ratio of about 500 parts by weight or less, preferably about 20 to 200 parts by weight, based on 100 parts by weight of the phenolic resin. The combined use with an epoxy resin can further improve the initial adhesion; however, when the amount of epoxy resin is greater than this range, water resistance is reduced. When an epoxy resin is used in combination, a curing accelerator, such as a tertiary amine based curing accelerator or imidazole based curing accelerator, can also be used at the same time.

Moreover, unvulcanized nitrile rubber or a compound thereof is used by being added at a ratio of about 1,000 parts by weight or less, preferably about 10 to 100 parts by weight, based on 100 parts by weight of novolak-type phenolic resin. The addition of nitrile rubber (compound) can further improve the heat resistant adhesion of the baking layer of the vulcanizing adhesive; however, when the amount of nitrile rubber (compound) is greater than this range, water resistant adhesion is reduced.

The vulcanizing adhesive is prepared as an organic solvent solution having component concentration of about 0.1 to 10wt.%, using an alcohol-based organic solvent such as methanol, ethanol, isopropanol, etc., a ketone-based organic solvent such as acetone, methyl ethyl ketone, methyl isobutyl ketone, etc., or a mixture thereof, and applied with a coating weight on one side of about 50 to 2,000mg/m² in the same manner as in the case of the surface-treating agent, followed by drying at room temperature or with hot air, and baking at about 100 to 250°C for about 1 to 20 minutes.

Then, unvulcanized nitrile rubber compound is applied on the resulting vulcanizing adhesive layer as an organic solvent solution thereof to form vulcanizate layers on both surfaces, each of which has a film thickness on one side of about 5 to 120µm. The nitrile rubber may be one that satisfies the following conditions: a vulcanized product thereof has a hardness (durometer A) of 80 or more, and a compression set (100°C, 22 hours) of 50% or less. Further, hydrogenated nitrile rubber can also be used. Although the formulation of the nitrile rubber does not cause any limitation, the nitrile rubber can also be used as a compound comprising a sulfur based vulcanizing agent, such as sulfur or tetramethylthiurammonosulfide. However, preferably, the nitrile rubber is used as an unvulcanized nitrile rubber compound comprising an organic peroxide as a crosslinking agent. The formulation of such a peroxide-crosslinked unvulcanized nitrile rubber compound is shown, for example, in the following formulation example.

**(Formulation Example)**

| | |
|---|---|
| NBR (N-235S, produced by JSR Corporation) | 100 Parts by weight |
| SRF carbon black | 80 Parts by weight |
| Calcium carbonate | 80 Parts by weight |
| Silica powder | 20 Parts by weight |
| Zinc oxide | 5 Parts by weight |
| Antioxidant (Nocrac 224, produced by Ouchi Shinko Chemical Industrial Co., Ltd.) | 2 Parts by weight |
| Triallyl isocyanurate | 2 Parts by weight |
| 1,3-bis(tert-butylperoxy)isopropyl benzene | 2.5 Parts by weight |
| Plasticizer (Vulkanol OT, produced by Bayer) | 5 Parts by weight |

The coated unvulcanized rubber layers are dried at room temperature to about 100°C for about 1 to 15 minutes to evaporate off alcohols such as methanol, ethanol, etc., ketones such as methyl ethyl ketone, methyl isobutyl ketone, etc., aromatic hydrocarbons such as toluene, xylene, etc., or a mixture thereof, used as an organic solvent, followed by vulcanization by heating at about 150 to 230°C for about 0.5 to 30 minutes. The vulcanization is performed while pressurizing, if necessary. The vulcanized nitrile rubber layers desirably have a hardness (Durometer A) of 80 or more, and a compression set (100°C for 22 hours) of 50% or less from the viewpoint of use as gasket. In case sticking prevention is required, an anti-sticking agent can be applied to the surfaces.

The anti-sticking agent is used to prevent sticking between rubbers themselves or between rubber and metal. Any anti-sticking agent can be used, so far as it can form a film layer on the vulcanized nitrile rubber layers, and includes, for example, silicone series, fluorine series, graphite series, wax series such as amides, paraffins, etc., polyolefin series, or polybutadiene series, and preferably an anti-sticking agent comprising a dispersion in an organic solvent of liquid 1,2-polybutadiene hydroxyl group-containing material, 1,2-polybutadiene isocyanate group-containing material, and polyolefin-based resin is used (Patent Document 5).

### EXAMPLES

The following describes the present invention with reference to Examples.

### Examples 1 to 7 and Comparative Examples 1 to 6

A surface-treating agent comprising ammonium zirconium carbonate, phosphoric acid, and silica, the amounts of which were adjusted so that the mass ratio of zirconium, phosphorus, and silica (as SiO₂) in the film of the surface-treating agent satisfied the ratio shown in Table 1, was applied to an alkaline degreased cold rolled steel plate (SPCC-4D: thicknes of 0.2 mm) at a predetermined one side base weight, and dried at 200°C for 1 minute. The pH of the surface-treating agent was adjusted to 6 to 10 by using ammonium hydroxide. Here, as the silica, colloidal silica was used (average particle diameter: 10 to 15 nm). Silica in the following table shows its weight ratio as SiO₂. Further, a conventional treatment, i.e., zinc phosphate treatment, was also performed using zinc phosphate as a surface-treating agent M, shown below. The zinc phosphate treatment was performed using Palbond L3020 (produced by Nihon Parkerizing Co., Ltd.) so that the one side base weight was 2,500 mg/m².

**Table 1**

| | Component composition ratio of surface-treating agent layer | | | Mass ratio | | | | One side base weight |
|---|---|---|---|---|---|---|---|---|
| | | | | Zr : P | | Zr : silica | | |
| Surface-treating agent | Zr | P | silica | Z | P | Zr | silica | (mg/m²) |
| [Zr : P] | | | | | | | | |
| A (less Zr) | 10.0 | 10.0 | 80.0 | 50.0 | 50.0 | 11.1 | 88.9 | 200 |
| B (more Zr) | 18.0 | 2.0 | 80.0 | 90.0 | 10.0 | 18.4 | 81.6 | 200 |
| C (middle Zr) | 14.0 | 6.0 | 80.0 | 70.0 | 30.0 | 14.9 | 85.1 | 200 |

| [Zr: silica] | | | | | | | | |
|---|---|---|---|---|---|---|---|---|
| D (less Zr) | 3.3 | 1.4 | 95.2 | 70.0 | 30.0 | 3.4 | 96.6 | 200 |
| E (more Zr) | 42.7 | 18.3 | 39.0 | 70.0 | 30.0 | 52.2 | 47.8 | 200 |

| [Base weight] | | | | | | | | |
|---|---|---|---|---|---|---|---|---|
| F (less) | 26.9 | 11.5 | 61.5 | 70.0 | 30.0 | 30.4 | 69.6 | 100 |
| G (more) | 26.9 | 11.5 | 61.5 | 70.0 | 30.0 | 30.4 | 69.6 | 500 |
| | | | | | | | | |
| H (less P) | 19.2 | 0.8 | 80.0 | 96.0 | 4.0 | 19.2 | 80.8 | 200 |
| I (no Zr) | 0.0 | 20.0 | 80.0 | 0.0 | 100.0 | 0.0 | 100.0 | 200 |
| J (no P) | 20.0 | 0.0 | 80.0 | 100.0 | 0.0 | 20.0 | 80.0 | 200 |
| K (only silica) | 0.0 | 0.0 | 100.0 | 0.0 | 0.0 | 0.0 | 100.0 | 200 |
| L (excess Zr) | 50.0 | 21.4 | 28.6 | 70.0 | 30.0 | 63.6 | 36.4 | 200 |

| | |
|---|---|
| Novolak-type phenolic resin | 100 parts by weight |
| Resol-type phenolic resin (30 wt.% methanol solution) | 150 parts by weight |
| Nirile rubber compound of the afore-mentioned | 133 Parts by weight |
| Formulation Example | |
| (25 wt.% toluene-methyl ethyl ketone mixed solvent solution) | |
| Methyl ethyl ketone | 3182 parts by weight |

A vulcanizing adhesive A comprising the above components (shown as the solution amount in the case of a solution; the same shall apply hereinafter) was applied to the resulting surface-treating agent A∼G and H∼M coated steel sheet to a coating weight of 1,500mg/m², followed by drying at room temperature and baking at 220°C for 5 minutes.

A 25wt.% solution of nitrile rubber compound of the afore-mentioned Formulation Example in mixed solvents of toluene - methyl etyl ketone (weight ratio of 9:1 ; the afore-mentioned mixing ratio of the mixed solvent solution was also the same) was applied to the vulcanizing adhesive-coated steel sheet, followed by drying at 60°C for 15 minutes to form unvulcanized rubber layers to a thickness of 25µm on one side, then by pressure vulcanization under the conditions of 220°C and 60kgf/cm² (5.88MPa) for 2 minutes, thereby obtaining a nitrile rubber-metal laminate gasket material.

The thus obtained gasket material was subjected to the following tests.

LLC half-dipping test: Only half of the vertically lower portion of each gasket material was dipped in a 50 wt.% aqueous solution of LLC (JCC310, produced by Japan Chemical Industries Co., Ltd.) at 120°C for 48 hours. Then, a spiral scoring test was performed according to JIS K6894, in which a spiral with a radius of 4.5 mm was drawn 25 times on the sample surface. The half non-dipped portion and the half dipped portion were each evaluated by the following evaluation criteria (scores).
Score 5: The rubber layer completely remains
Score 4: Part of the rubber layer is removed
Score 3: About half of the rubber layer is removed
Score 2: The rubber layer slightly remains
Score 1: The rubber layer is completely removed

LLC resistance test: The gasket materials completely dipped in a 50 wt.% aqueous solution of LLC (JCC310) at 120°C for 500 hours were subjected to a lattice pattern tape peeling test according to JIS K5400, and the results were evaluated using the following scores:
Score 5: The cut edge is completely smooth, and no lattice is peeled
Score 4: The coating film is slightly peeled at the intersection of the cut (peeled area ratio: less than 5%)
Score 3: The coating film is peeled along the cut edge or at the intersection (peeled area ratio: 5 to less than 15%)
Score 2: Part or the whole of the coating film is peeled along the cut edge (peeled area ratio: 15 to less than 35%)
Score 1: Part or the whole of the coating film is peeled along the cut edge (peeled area ratio: 35% or more)

Heat resistance test: The gasket materials were exposed in a thermostat at 120°C for 500 hours. After being allowed to stand, the gasket materials were subjected to the above lattice pattern tape peeling test, and the results were evaluated in the same manner as above.

### Examples 8 to 14 and Comparative Examples 7 to 12

In Examples 1 to 7 and Comparative Examples 1 to 6, a vulcanizing adhesive B having the following composition was used in place of the vulcanizing adhesive A.

| | |
|---|---|
| Novolak-type phenolic resin | 100 parts by weight |
| Resol-type phenolic resin (30 wt.% methanol solution) | 33 parts by weight |
| Nirile rubber compound of the afore-mentioned | 133 Parts by weight |
| Formulation Example | |
| (25 wt.% toluene-methyl ethyl ketone mixed solvent solution) | |
| Methyl ethyl ketone | 2597 parts by weight |

### Examples 15 to 21 and Comparative Examples 13 to 18

In Examples 1 to 7 and Comparative Examples 1 to 6, a vulcanizing adhesive C having the following composition was used in place of the vulcanizing adhesive A.

| | |
|---|---|
| Novolak-type phenolic resin | 100 parts by weight |
| Resol-type phenolic resin (30 wt.% methanol solution) | 333 parts by weight |
| Nirile rubber compound of the afore-mentioned | 133 Parts by weight |
| Formulation Example | |
| (25 wt.% toluene-methyl ethyl ketone mixed solvent solution) | |
| Methyl ethyl ketone | 4097 parts by weight |

### Examples 22 to 25

In Examples 3 (a surface-treating agent C was used), vulcanizing adhesives D-G having the following composition were used in place of the vulcanizing adhesive A.

**Vulcanizing adhesive D:**

| | |
|---|---|
| Resol-type phenolic resin (30 wt.% methanol solution) | 100 parts by weight |
| Nirile rubber compound of the afore-mentioned | 96 Parts by weight |
| Formulation Example | |
| (25 wt.% toluene-methyl ethyl ketone mixed solvent solution) | |
| Methyl ethyl ketone | 884 parts by weight |

**Vulcanizing adhesive E:**

| | |
|---|---|
| Resol-type phenolic resin (30 wt.% methanol solution) | 100 parts by weight |
| Thermosetting resin having a dihydrobenzoxazine ring (30 wt.% methyl ethyl ketone solution) | 100 parts by weight |
| Nirile rubber compound of the afore-mentioned | 192 Parts by weight |
| Formulation Example | |
| (25 wt.% toluene-methyl ethyl ketone mixed solvent solution) | |
| Methyl ethyl ketone | 1768 parts by weight |

**Vulcanizing adhesive F:**

| | |
|---|---|
| Resol-type phenol resin (30 wt.% methanol solution) | 100 Parts by weight |
| o-Cresol novolak-type epoxy resin (Epikote 180S, produced by Japan Epoxy Resin Co.) | 18 Parts by weight |
| 2-ethyl-4-methylimidazole | 0.9 Parts by weight |
| Nirile rubber compound of the afore-mentioned | 96 Parts by weight |
| Formulation Example | |
| (25 wt.% toluene-methyl ethyl ketone | |
| mixed solvent solution) | |
| Methyl ethyl ketone | 763.1 Parts by weight |

**Vulcanizing adhesive G:**

| | |
|---|---|
| Resol-type phenolic resin (30 wt.% methanol solution) | 100 parts by weight |
| Thermosetting resin having a dihydrobenzoxazine ring (30 wt.% methyl ethyl ketone solution) | 100 parts by weight |
| o-Cresol novolak-type epoxy resin (Epikote 180S) | 36 Parts by weight |
| 2-ethyl-4-methylimidazole | 1.8 Parts by weight |
| Nirile rubber compound of the afore-mentioned | 192 Parts by weight |
| Formulation Example | |
| (25 wt.% toluene-methyl ethyl ketone mixed solvent solution) | |
| Methyl ethyl ketone | 1508.2 Parts by weight |

Table 2 below shows the results obtained in the above Examples and Comparative Examples.

**Table 2**

| | | | LLC half-dilipping test | | | |
|---|---|---|---|---|---|---|
| Example | Surface-treating agent | Vulcanizing adhesive | Half non-Dipped Portion | Half Dipped Portion | LLC Resistance Test | Heat Resistance Test |
| Ex. 1 | A | A | 5 | 5 | 5 | 5 |
| Ex. 2 | B | A | 5 | 5 | 5 | 5 |
| Ex. 3 | C | A | 5 | 5 | 5 | 5 |
| Ex. 4 | D | A | 5 | 5 | 5 | 5 |
| Ex. 5 | E | A | 5 | 5 | 5 | 5 |
| Ex. 6 | F | A | 5 | 5 | 5 | 5 |
| Ex. 7 | G | A | 5 | 5 | 5 | 5 |
| Comp Ex. 1 | H | A | 3 | 5 | 5 | 5 |
| Comp Ex. 2 | I | A | 1 | 5 | 1 | 1 |
| Comp Ex. 3 | J | A | 1 | 5 | 3 | 3 |
| Comp Ex. 4 | K | A | 1 | 2 | 1 | 1 |
| Comp Ex. 5 | L | A | 2 | 5 | 5 | 5 |
| Comp Ex. 6 | M | A | 1 | 5 | 4 | 4 |
| Ex. 8 | A | B | 5 | 5 | 5 | 5 |
| Ex. 9 | B | B | 5 | 5 | 5 | 5 |
| Ex. 10 | C | B | 5 | 5 | 5 | 5 |
| Ex. 11 | D | B | 5 | 5 | 5 | 5 |
| Ex. 12 | E | B | 5 | 5 | 5 | 5 |
| Ex. 13 | F | B | 5 | 5 | 5 | 5 |
| Ex. 14 | G | B | 5 | 5 | 5 | 5 |
| Comp Ex. 7 | H | B | 3 | 5 | 5 | 5 |
| Comp Ex. 8 | I | B | 1 | 5 | 1 | 1 |
| Comp Ex. 9 | J | B | 2 | 5 | 3 | 3 |
| Comp Ex. 10 | K | B | 1 | 2 | 1 | 1 |
| Comp Ex. 11 | L | B | 2 | 5 | 5 | 5 |
| Comp Ex. 12 | M | B | 2 | 5 | 4 | 4 |
| Ex. 15 | A | C | 5 | 5 | 5 | 5 |
| Ex. 16 | B | C | 5 | 5 | 5 | 5 |
| Ex. 17 | C | C | 5 | 5 | 5 | 5 |
| Ex. 18 | D | C | 5 | 5 | 5 | 5 |
| Ex. 19 | E | C | 5 | 5 | 5 | 5 |
| Ex. 20 | F | C | 5 | 5 | 5 | 5 |
| Ex. 21 | G | C | 5 | 5 | 5 | 5 |
| Comp Ex. 13 | H | C | 4 | 5 | 5 | 5 |
| Comp Ex. 14 | I | C | 2 | 5 | 1 | 1 |
| Comp Ex. 15 | J | C | 3 | 5 | 3 | 3 |
| Comp Ex. 16 | K | C | 2 | 2 | 1 | 1 |
| Comp Ex. 17 | L | C | 3 | 5 | 5 | 5 |
| Comp Ex. 18 | M | C | 3 | 5 | 4 | 4 |
| Ex. 22 | C | D | 5 | 5 | 5 | 5 |
| Ex. 23 | C | E | 5 | 5 | 5 | 5 |
| Ex. 24 | C | F | 5 | 5 | 5 | 5 |
| Ex. 25 | C | G | 5 | 5 | 5 | 5 |

### INDUSTRIAL APPLICABILITY

The nitrile rubber-metal laminated gasket material of the present invention has excellent heat resistance, and exhibits sufficient adhesion even after being dipped in or exposed to LLC. Due to these effects, the nitrile rubber-metal laminated gasket material of the present invention can be effectively used as a vehicle accessory, such as a car air conditioner compressor gasket, a water pump gasket, or like gasket for use in contact with coolants; an intake manifold gasket, a throttle body gasket, or like gasket in fuel piping systems; a cam cover gasket, a timing belt cover gasket, an oil pan gasket, an oil strainer gasket, an oil pump gasket, a heater pipe gasket, or like gasket used in engine systems; or a power steering gasket, a brake shim gasket, a transmission separator plate gasket, a transmission case gasket, or like vehicle components.

## Claims

1. A nitrile rubber-metal laminated gasket material comprising a surface-treating agent layer containing a zirconium-containing compound, a phosphorus-containing compound, and silica; a vulcanizing adhesive layer; and a nitrile rubber layer, which are sequentially laminated on a metal plate.

2. The nitrile rubber-metal laminated gasket material according to claim 1, wherein the surface-treating agent has the element mass ratio of Zr element in the zirconium-containing compound to P element in the phosphorus-containing compound of 95:5 to 40:60.

3. The nitrile rubber-metal laminated gasket material according to claim 1 or 2, wherein the surface-treating agent has the mass ratio of Zr element in the zirconium-containing compound to silica of 1:99 to 60:40.

4. The nitrile rubber-metal laminated gasket material according to claim 1, wherein the metal plate is alkaline degreased SPCC or SPFC.

5. The nitrile rubber-metal laminated gasket material according to claim 1, wherein the vulcanizing adhesive is a thermosetting phenolic resin based vulcanizing adhesive.

6. The nitrile rubber-metal laminated gasket material according to claim 5, wherein the phenolic resin is a combination of a novolak-type phenolic resin and a resol-type phenolic resin.

7. The nitrile rubber-metal laminated gasket material according to claim 5, wherein a novolak-type epoxy resin is used in combination with the phenolic resin.

8. The nitrile rubber-metal laminated gasket material according to claim 5, wherein the vulcanizing adhesive layer further contains unvulcanized nitrile rubber or a nitrile rubber compound.

9. The nitrile rubber-metal laminated gasket material according to claim 1, wherein an anti-sticking agent layer is formed on the nitrile rubber layer.

10. A metal plate having a surface-treating agent layer containing a zirconium-containing compound, a phosphorus-containing compound, and silica.

## Amended claims

### Amended claims under Art. 19.1 PCT

1. (Amended) A nitrile rubber-metal laminated gasket material comprising a surface-treating agent layer containing a zirconium-containing compound, a phosphoric acid, and silica; a vulcanizing adhesive layer; and a nitrile rubber layer, which are sequentially laminated on a metal plate, wherein the surface-treating agent has the element mass ratio of Zr element in the zirconium-containing compound to P element in the phosphoric acid of 95:5 to 40:60.

2. (Amended) The nitrile rubber-metal laminated gasket material according to claim 1, wherein the zirconium-containing compound is zirconium ammonium carbonate.

3. The nitrile rubber-metal laminated gasket material according to claim 1 or 2, wherein the surface-treating agent has the mass ratio of Zr element in the zirconium-containing compound to silica of 1:99 to 60:40.

4. The nitrile rubber-metal laminated gasket material according to claim 1, wherein the metal plate is alkaline degreased SPCC or SPFC.

5. The nitrile rubber-metal laminated gasket material according to claim 1, wherein the vulcanizing adhesive is a thermosetting phenolic resin based vulcanizing adhesive.

6. The nitrile rubber-metal laminated gasket material according to claim 5, wherein the phenolic resin is a combination of a novolak-type phenolic resin and a resol-type phenolic resin.

7. The nitrile rubber-metal laminated gasket material according to claim 5, wherein a novolak-type epoxy resin is used in combination with the phenolic resin.

8. The nitrile rubber-metal laminated gasket material according to claim 5, wherein the vulcanizing adhesive layer further contains unvulcanized nitrile rubber or a nitrile rubber compound.

9. The nitrile rubber-metal laminated gasket material according to claim 1, wherein an anti-sticking agent layer is formed on the nitrile rubber layer.

10. (deleted)

Statement under Art. 19.1 PCT
Claim 1 was amended to specify the element mass ratio of Zr element in the zirconium-containing compound to P element in the phosphoric acid in the surface-treating agent, based on the description of paragraph [0012].

Further, claim 2 was amended to specify that ammonium zirconium carbonate is used as the zirconium-containing compound, based on the description of paragraph [0011] and Examples.
